# EUROPEAN PATENT SPECIFICATION

(11) **EP 2 346 786 B1**
(45) Date of publication and mention of the grant of the patent: **16.09.2015**
(21) Application number: 09736333.7
(22) Date of filing: 22.09.2009
(51) Int. Cl.: C01F 7/06, B01D 21/01, C02F 1/54

(54) **USE OF SILICON-CONTAINING POLYMERS FOR IMPROVED FLOCCULATION OF SOLIDS IN PROCESSES FOR THE PRODUCTION OF ALUMINA FROM BAUXITE**
VERWENDUNG VON SILICIUMHALTIGEN POLYMEREN ZUR VERBESSERTEN AUSFLOCKUNG VON FESTSTOFFEN BEI VERFAHREN ZUR HERSTELLUNG VON ALUMINIUMOXID AUS BAUXIT
UTILISATION DE POLYMÈRES CONTENANT DU SILICIUM POUR L'AMÉLIORATION DE LA FLOCULATION DES SOLIDES DANS DES PROCÉDÉS DE PRODUCTION D'ALUMINE À PARTIR DE BAUXITE

(30) Priority: 17.10.2008 US 106343 P
(43) Date of publication of application: 27.07.2011
(73) Proprietor: Cytec Technology Corporation, Wilmington, DE 19801 (US)
(72) Inventor: DAVIS, Matthew, J., Milford CT 06460 (US); DAI, Qi, Stamford CT 06902 (US); CHEN, Haunn-Lin, Tony, Darien CT 06820 (US); TAYLOR, Matthew, NY 10016 (US)
(74) Representative: Deckers, Hellmuth Alexander
(86) International application number: PCT/US2009/057828
(87) International publication number: WO 2010/044986

(56) References cited:
- WO-A-2004/009606
- WO-A-2008/130766
- US-A- 4 767 540
- US-A1- 2005 274 926

## Description

### FIELD OF THE INVENTION

This invention relates to the removal of suspended solids from processes for digesting bauxite ore, as for example in the Bayer and Sinter alumina process streams, for producing aluminum hydroxide, by contacting the streams with silicon-containing polymers.

### BACKGROUND

Bauxite is the basic raw material for almost all manufactured alumina compounds. In the course of production of aluminum compounds, bauxite can be refined to aluminum hydroxide by the Bayer process, the Sinter process, and combinations thereof. Bauxites are typically classified according to their main mineralogical constituents as gibbsitic, boehmitic and diasporic. This mineralogical composition can impact the preferred method of processing.

During the Bayer process for the production of alumina from bauxite, the ore is digested at high temperature and pressure with NaOH solution to obtain supersaturated sodium aluminate solutions containing insoluble impurities that remain in suspension. When the bauxite contains mainly gibbsite, the extraction of alumina from bauxite can be achieved in the temperature range of 100 to 150°C. However, if the bauxite contains mainly boehmite or diaspore, the extraction of alumina becomes more difficult, requiring temperatures greater than 200°C. Furthermore, it is well known that the addition of lime during the digestion of boehmitic or diasporic bauxite can improve the alumina recovery.

The Sinter process is an alternative or an adjuvant to the Bayer process, which is commonly used for the treatment of high silica containing bauxites. In the Sinter process, the bauxite (or Bayer "red mud") is calcined at 1200°C with soda and/or lime prior to leaching with NaOH solution, which generates sodium aluminate liquor and insoluble "sinter mud".

The insoluble residues generated during the processes for digesting bauxite ore to produce alumina, include iron oxides, sodium aluminosilicates, calcium aluminosilicates, calcium titanate, titanium dioxide, calcium silicates and other materials. The bauxite mineralogy and chemical additives added during processing have an effect on the solid phases present. The process of separating bauxite residue solids from the supersaturated green liquor near its boiling point is known as "clarification".

In the clarification stage, the coarser solid particles are generally removed with a "sand trap" cyclone. To separate the finer solid particles from the liquor, the slurry is normally fed to the center well of a mud settler where it is treated with a flocculant composition that may be based on a variety of flocculating agents including starch, flour, polyacrylate salt polymer, acrylate salt/acrylamide copolymer, and/or water-soluble polymers containing pendant hydroxamic acid or salt groups. As the mud settles, clarified sodium aluminate solution, referred to as green liquor, overflows a weir at the top of the mud settling tank and is passed to the subsequent process steps.

At this point, the Sinter process often requires another step where a desilication additive such as lime is added to the overflow liquor to remove soluble silica species from the liquor. The slurry is treated with flocculants and fed to a desilication settler to remove insoluble desilication products that include sodium aluminosilicates and calcium aluminosilicates.

The settled solids from the flocculation procedure, known as mud, are withdrawn from the bottom of the mud settler and passed through a countercurrent washing circuit for recovery of sodium aluminate and soda. Aluminate liquor overflowing the settler may still contain significant amounts of suspended solids. This liquor is generally further clarified by filtration to give a filtrate that contains a very low level of suspended solids.

The purified, or pregnant sodium aluminate liquor is generally cooled to enhance supersaturation and then seeded, e.g. with fine gibbsite seed from previous cycles, or neutralized with CO₂ gas to initiate precipitation of the desired end product Al(OH)₃, alumina trihydrate.

The remaining liquid phase is returned to the initial digestion step and, after being reconstituted with additional caustic, is employed as a digestant of additional ore.

In the clarification step, the suspended solids are preferably separated at a relatively fast rate if the overall process is to be efficient. Efficient removal of suspended solids from process streams in processes to digest bauxite ore to produce alumina has been a major challenge for many years. Among the methods of speeding up separation of suspended solids from process streams as well as providing a cleaner separation of the constituents are those disclosed in U.S. Pat. No. 3,390,959, which employs polyacrylates as flocculants, and U.S. Pat. No. 3,681,012, which uses combinations of polyacrylates and starch in Bayer alumina recovery circuits. U.S. Pat. No. 4,083,925 discloses the use of polyacrylamide within the mud settler. U.S. Pat. No. 4,678,585 teaches that different stages in the Bayer alumina recovery circuit are advantageously treated with different flocculant compositions. U.S. Pat. No. 4,767,540 describes a process for removing suspended solids from Bayer alumina process streams by contacting and mixing a Bayer process stream with hydroxamated polymers. The hydroxamated polymers may be employed with anionic polyacrylate. U.S. Pat. No. 5,516,435 and U.S. Pat. No. 5,539,046 use blends of hydroxamated polymer emulsions with polyacrylate emulsions to remove suspended solids from Bayer alumina process streams. Other polymers disclosed for the treatment of red mud in the Bayer process include phosphonic acid-containing polymers (U.S. Pat. No. 5,534,235), water continuous methyl acrylate emulsion polymers (U.S. Pat. No. 6,036,869), and salicylic acid containing polymers (U.S. Pat. No. 6,527,959).

Silicon-containing polymers have been disclosed for water clarification. For instance, U.S. Pat. No. 3,779,912 uses silicon-containing aminomethylphosphonates to flocculate suspended solids in water. Copolymers of diallydimethylammonium halide and a vinyltrialkoxysilane are disclosed as a coagulant used in demulsification of oily waste waters (U.S. Pat. No. 5,560,832), dewatering of mineral slurries (U.S. Pat. No. 5,597,475), and clarification of waste waters (U.S. Pat. No. 5,679,261). U.S. Pat. No. 6,605,674 discloses the use of vinyltrialkoxysilanes as crosslinking agents to modify structure of nonionic, cationic and anionic water-soluble polymers and the use of the structurally-modified polymers as flocculating agents. None of the above-mentioned silicon-containing polymer patents relate to the treatment of suspended solids from processes for digesting bauxite ore to produce alumina process streams wherein the overall makeup from a physical standpoint is completely different than that used to flocculate water.

The use of silicon-containing polymers to control aluminosilicate scale has been disclosed, see U.S. Pat. Nos. 6,814,873 and 7,390,415 and U.S. Pat. Pub. Nos. 2004/0162406 A1, 2005/0010008 A2. These publications describe methods for using the silicon-containing polymers to inhibit dissolved aluminosilicates (such as sodium aluminosilicate) from adhering or depositing an aggregate on surfaces to form scale, but would not be expected to flocculate suspended solids, which instead encourage, not discourage aggregation.

It has been now discovered that greatly improved flocculation of suspended solids, especially calcium silicate, calcium aluminosilicate and calcium titanate particles, from processes for digesting bauxite ore to extract aluminum trihydrate, in particular Bayer and/or Sinter process streams wherein lime and/or another source of calcium such as CaCO₃ and Ca(OH)₂ has been added or is present in quantities of at least 1 % by weight (calculated as CaO), may be obtained by adding and efficiently mixing a silicon-containing polymer into the Bayer and/or Sinter process stream alone or subsequent to, followed by or in association with a conventional flocculant. This treatment is particularly effective in treating bauxite residue solids containing high silicates, aluminosilicates and titanium containing oxides when compared with state-of-the art processes, as exemplified by the patents mentioned above. The treatment is typically but not always done preceding the step in the process for settling mud and can significantly reduce the need for filtration. Since the suspended solids may contain undesirable impurities, the reductions in suspended solids achieved by practice of the present invention may also result in improved purity of the resultant alumina product.

### SUMMARY

The present invention provides silicon-containing polymers, flocculant compositions and processes for the reduction of suspended solids from a process stream of the process for digesting bauxite ore to produce alumina. The processes involve contacting a process stream, such as one which comes from the Bayer or Sinter process with such a silicon-containing polymer and/or flocculant composition to flocculate suspended solids in processes for digesting bauxite ore to produce alumina process streams. In preferred embodiments, silicon-containing polymers and flocculant compositions described herein are particularly useful for flocculating suspended calcium silicate, calcium aluminosilicate, calcium titanate and/or titanium dioxide particles in the process streams. The process for digesting bauxite ore to make alumina process stream that can advantageously be contacted with the silicon-containing polymers and/or flocculant compositions in accordance with the present invention can be any portion of the feed, e.g., settler feed, settler overflow, blow-off discharge, or from the alumina precipitation (i.e., recovery) circuit. The process for digesting bauxite ore to make alumina process stream contacted with the polymer can also be feed to a desilication settler or feed to a mud washer in the washer train.

An embodiment provides a flocculant composition, comprising a silicon-containing polymeric flocculant for calcium silicates, calcium aluminosilicates, calcium titanate, and/or titanium dioxide and a, preferably anionic, polymeric flocculant for a Bayer or Sinter process mud. The weight ratio of the amount of the silicon-containing polymeric flocculant to the amount of the polymeric flocculant in said flocculant composition may be in the range of about 100:1 to about 1:10, e.g., in the range of about 10:1 to about 1:2, such as about 1:1. Another embodiment provides a flocculation method, comprising intermixing such a flocculant composition with a Bayer or Sinter process stream in an amount effective to flocculate at least a portion of solids suspended therein, wherein the suspended solids comprise at least one selected from the group consisting of calcium silicates, calcium aluminosilicates, calcium titanate, titanium dioxide, and mixtures thereof.

Another embodiment provides a flocculation method, comprising intermixing a silicon-containing polymer flocculant with a Bayer or Sinter process stream in an amount effective to thereby flocculate at least a portion of calcium silicate, calcium aluminosilicate, calcium titanate, and/or titanium dioxide particles suspended therein; and separating at least a portion of the flocculated calcium silicate, calcium aluminosilicate, calcium titanate, and titanium dioxide thus formed.

Another embodiment provides a water-soluble or water-dispersible silicon-containing polymer comprising a silicon-containing group attached thereto, wherein the silicon-containing polymer is configured so that the silicon-containing group enhances an ability of the silicon-containing polymer to flocculate suspended calcium silicate, calcium aluminosilicate, calcium titanate, and titanium dioxide particles. In an embodiment, the silicon-containing group is -Si(OR)₃, where R is Na⁺, K⁺, or NH₄⁺. In another embodiment, the amount of the silicon-containing group in the silicon-containing polymer is at least about 5 weight %. Another embodiment provides a flocculation method, comprising intermixing such a silicon-containing polymer with a process stream in a process for digesting bauxite to produce alumina in an amount effective to flocculate at least a portion of solids suspended therein, wherein the suspended solids comprise at least one selected from the group consisting of calcium silicates, calcium aluminosilicates, calcium titanate, titanium dioxide, and mixtures thereof.

Another embodiment provides a hydroxamated water-soluble or water-dispersible silicon-containing polymer comprising a silicon-containing group attached thereto. Another embodiment provides a flocculation method, comprising intermixing such a hydroxamated silicon-containing polymer with a process stream in a process for digesting bauxite to produce alumina in an amount effective to flocculate at least a portion of solids suspended therein, wherein the suspended solids comprise at least one selected from the group consisting of calcium silicates, calcium aluminosilicates, calcium titanate, titanium dioxide, and mixtures thereof.

These and other embodiments are described in greater detail below.

### DETAILED DESCRIPTION

The following description and examples illustrate preferred embodiments of the present invention in detail. Those of skill in the art will recognize that there are numerous variations and modifications of this invention that are encompassed by its scope. Accordingly, the description of preferred embodiments should not be deemed to limit the scope of the present invention.

It has now been found that various silicon-containing polymers are useful as flocculants for suspended process solids, particularly those containing suspended calcium silicates, calcium aluminosilicates, calcium titanate, titanium dioxide and mixtures thereof. Examples of silicon-containing polymers useful in the flocculation methods described herein include those described in U.S. Pat. Nos. 6,814,873 and 7,390,415 and U.S. Pat. Pub. Nos. 2004/0162406 A1, 2005/0010008 A2, all of which are hereby incorporated by reference in their entireties, and particularly for the purpose of describing silicon-containing polymer flocculants and methods of making them. Other examples of silicon-containing polymeric flocculants for calcium silicates, calcium aluminosilicates, calcium titanate, and titanium dioxide are described herein. Those skilled in the art can use routine experimentation in view of the guidance provided herein to identify other silicon-containing polymeric flocculants useful in the methods described herein, e.g., as flocculants for calcium silicates, calcium aluminosilicates, calcium titanate, and titanium dioxide.

An embodiment provides a water-soluble or water-dispersible silicon-containing polymer comprising a silicon-containing group attached thereto, wherein the silicon-containing polymer is configured so that the silicon-containing group enhances an ability of the silicon-containing polymer to flocculate suspended calcium silicates, calcium aluminosilicates, calcium titanate, and titanium dioxide particles.

An embodiment provides a water-soluble or water-dispersible silicon-containing polymer, e.g. a polymer that contains a pendant silicon-containing group(s) such as a silane. In an embodiment, the silicon-containing polymer is a flocculant for calcium silicates, calcium aluminosilicates, calcium titanate, and titanium dioxide, e.g., is configured so that the silicon-containing group(s) enhances an ability of the silicon-containing polymer to flocculate suspended calcium silicates, calcium aluminosilicates, calcium titanate, and titanium dioxide. The silicon-containing polymer may be included in a flocculant composition. In an embodiment, the flocculant composition contains a further polymer flocculant, such as an anionic polymeric flocculant for a Bayer or Sinter process mud. Various silicon-containing polymers, polymer compositions and methods for using them are described below.

Examples of silicon-containing polymers include those having pendant silane groups, e.g., silicon-containing pendant groups of the Formula (I) attached thereto:

-Si(OR)₃ (I)

wherein each R is independently hydrogen, C₁₋₂₀ alkyl, C_{2**-**20} alkenyl, C₂₋₂₀ alkynyl, C₆₋₁₂ aryl, C₇₋₂₀ arylkyl, a group I metal ion, a group II metal ion, or NR'₄⁺; where each R' is independently hydrogen, C₁₋₂₀ alkyl, C₂₋₂₀ alkenyl, C₂₋₂₀ alkynyl, C₆₋₁₂ aryl, and C₇₋₂₀ arylkyl; and where R and R' are each independently unsubstituted, hydroxy-substituted, or beta-hydroxy substituted. Examples of R groups include lower alkyl groups, e.g., C₁₋₆ alkyl groups and C₁₋₃ alkyl groups; phenyl, benzyl, Na⁺, K⁺, and NH₄⁺. Preferred R groups are selected from the group consisting of Na⁺, K⁺, and NH₄⁺. The amount of silicon-containing group in the silicon-containing polymer can vary over a relatively broad range, and the polymer can be configured to provide enhanced flocculation of solids.

Routine experimentation informed by the guidance provided herein may be used to select a silicon-containing polymer that is effective for a particular application, e.g., by selecting a polymer backbone, molecular weight, silicon-containing group and amount thereof to make a polymer that is effective to flocculate calcium silicates, calcium aluminosilicates, calcium titanate, and titanium dioxide. For example, routine experimentation informed by the guidance provided herein may be used to configure the polymer so that the silicon-containing group(s) enhances an ability of the silicon-containing polymer to flocculate suspended solids, especially calcium silicates, calcium aluminosilicates, calcium titanate, and titanium dioxide. Suitable amounts of silicon-containing groups in the silicon-containing polymer may vary, depending on the type of the polymer and the application. For example, in an embodiment the silicon-containing polymer contains at least about 1 weight % of the -Si(OR)₃ group, e.g., at least about 5 weight % of the -Si(OR)₃ group. Routine experimentation informed by the guidance provided herein may be used to select a polymer having an appropriate molecular weight. For example, the molecular weight of the silicon-containing polymer may vary over a broad range, e.g. from about 1,000 to about 15 million, and is often about 10,000 or greater, or about 100,000 or greater, e.g., in the range of from about 10,000 to about 10 million, such as about 100,000 to about 5 million. Molecular weights as described herein are weight average as determined by high pressure size exclusion chromatography (light scattering detection) unless otherwise stated.

In some embodiments, the -Si(OR)₃ group is a trimethoxysilane group (R = methyl) or a triethoxysilane group (R = ethyl). Other alkyl, alkenyl and/or alkynyl groups can also be advantageously employed as R in the pendant groups of Formula (I). The term "alkyl," as used herein is a broad term and is used in its ordinary sense, including, without limitation, to refer to a straight chain or branched, noncyclic or cyclic, saturated aliphatic hydrocarbon containing from one, two, three, four, five, six, seven, eight, nine, or ten carbon atoms, while the term "lower alkyl" has the same meaning as alkyl but contains one, two, three, four, five, or six carbon atoms. Representative saturated straight chain alkyl groups include methyl, ethyl, n-propyl, n-butyl, n-pentyl, n-hexyl, and the like. Examples of saturated branched alkyl groups include isopropyl, *sec-*butyl, isobutyl, *tert*-butyl, isopentyl, and the like. Representative saturated cyclic alkyl groups include cyclopropyl, cyclobutyl, cyclopentyl, cyclohexyl, -CH₂cyclopropyl,-CH₂cyclobutyl, -CH₂cyclopentyl, -CH₂cyclohexyl, and the like. Cyclic alkyl groups may also be referred to as "homocyclic rings" and include di- and poly-homocyclic rings such as decalin and adamantane. Alkenyl groups contain at least one double bond between adjacent carbon atoms. Representative unsaturated cyclic alkenyl groups include cyclopentenyl and cyclohexenyl, and the like. Representative straight chain and branched alkenyl groups include ethylenyl, propylenyl, 1-butenyl, 2-butenyl, isobutylenyl, 1-pentenyl, 2-pentenyl, 3-methyl-1-butenyl, 2-methyl-2-butenyl, 2,3-dimethyl-2-butenyl, and simlar compounds. Representative straight chain and branched alkynyl groups include acetylenyl, propynyl, 1-butynyl, 2-butynyl, 1-pentynyl, 2-pentynyl, 3-methyl-1 butynyl, and similar compounds. While unsubstituted alkyl groups are generally preferred, substituted alkyl groups can also be advantageously employed.

In certain embodiments, R can be or include an aryl group. The term "aryl" as used herein is a broad term and is used in its ordinary sense, including, without limitation, to refer to an aromatic carbocyclic moiety such as phenyl or naphthyl, as well as arylalkyl and alkylaryl moieties. The term "arylalkyl" as used herein is a broad term and is used in its ordinary sense, including, without limitation, to refer to an alkyl having at least one alkyl hydrogen atom replaced with an aryl moiety, such as benzyl, -CH₂(1 or 2-naphthyl), -(CH₂)₂phenyl, -(CH₂)₃phenyl, -CH(phenyl)₂, and the like. The term "alkylaryl" as used herein is a broad term and is used in its ordinary sense, including, without limitation, to refer to an aryl having at least one aryl hydrogen atom replaced with an alkyl moiety. Particularly preferred aryl groups include C₆₋₁₂ aryl and C₇₋₂₀ aralkyl groups.

While unsubstituted alkyl or aryl groups are generally preferred, in certain embodiments substituted alkyl or aryl groups can advantageously be employed. The term "substituted," as used herein is a broad term and is used in its ordinary sense, including, without limitation, to refer to any of the above groups (e.g., alkyl, aryl) wherein at least one hydrogen atom is replaced with a substituent. In the case of a keto substituent ("-C(=O)-") two hydrogen atoms are replaced. When substituted, "substituents," within the context of preferred embodiment, include halogen, hydroxy, cyano, nitro, sulfonamide, carboxamide, carboxyl, ether, carbonyl, amino, alkylamino, dialkylamino, alkoxy, alkylthio, haloalkyl, and the like. Alternatively, one or more of the carbon atoms of the R group can be substituted by a heteroatom, e.g., nitrogen, oxygen, or sulfur.

In some embodiments, the silicon-containing group includes one or more hydroxy groups, e.g., a beta hydroxy group, as substituents. For example, in some embodiments the silicon-containing polymer includes one or more hydroxamate (-CONH(OH)) groups. Any of the silicon-containing polymers described herein can be hydroxamated. For example, an embodiment provides a hydroxamated water-soluble or water-dispersible silicon-containing polymer comprising a silicon-containing group attached thereto.

The pendant silicon-containing group(s) can be bonded directly to an atom (e.g., a carbon atom) in the backbone of the silicon-containing polymer, or to the backbone of the polymer through a suitable linking group. Examples of linking groups include fully saturated linear C₁₋₆ alkyl chains, as well as alkyl chains with ether linkages (e.g., alkoxy or poly(alkoxy) linking groups). Other linking groups include alkyl chains with amide linkages and hydroxy substituents, for example:

-C(=O)(NH)CH₂CH₂CH₂-

-NHCH₂CHOHCH₂OCH₂CH₂CH₂-

-NHC(=O)NHCH₂CH₂CH₂-

In an embodiment, the pendant silicon-containing groups are included on or attached to the polymer backbone and/or any suitable portion of the polymer (e.g., as an end group, on a grafted portion or side chain, or the like). In certain embodiments, it can be desirable to include other pendant groups in addition to the silicon-containing group pendant group. Examples of other pendant groups include carboxylate groups such as -C(=O)O- or -C(=O)OH, amide groups such as -C(=O)NH₂, hydroxamated groups such as -C(=O)NHO-, and amine groups such as -NH₂. Other pendant groups can also be employed, as will be appreciated by one of skill in the art.

In some embodiments, the polymer backbone comprises substituted ethylene recurring units, e.g., -[CH₂C(R^{x})H]-, wherein R^{x} comprises a silane group with or without a linking group as described elsewhere herein, or another pendant substituent. A single kind of linking group can be employed, or combinations of linking groups can be employed. In certain embodiments, additional hydrogen atoms of the ethylene recurring unit can be substituted by a pendant silane group or some other pendant group, e.g. a methyl group.

The silicon-containing polymers described herein can be made in a variety of ways. See, e.g., U.S. Pat. Nos. 6,814,873 and 7,390,415 and U.S. Pat. Pub. Nos. 2004/0162406 A1, 2005/0010008 A2, all of which are hereby incorporated herein by reference, and particularly for the purpose of describing silicon-containing polymers and methods for making them. For example, in some embodiments they can be made by polymerizing a monomer containing the group -Si(OR)₃ of Formula (I), or by copolymerizing such a monomer with one or more co-monomers. Suitable silane monomers include, but are not limited to, vinyltriethoxysilane, vinyltrimethoxysilane, allyltriethoxysilane, butenyl-triethoxysilane, γ-N-acrylamidopropyltriethoxysilane, γ-N-methacrylamidopropyltriethoxysilane, p-triethoxysilylstyrene, 2-(methyl-trimethoxysilyl) acrylic acid, 2-(methyl-trimethoxysilyl) methacrylic acid, 2-(methyltrimethoxysilyl)-1,4-butadiene, N-triethoxysilylpropyl-maleimide and other reaction products of maleic anhydride and other unsaturated anhydrides with amino compounds containing a-Si(OR)₃ group. The monomers or resulting recurring units can be hydrolyzed by aqueous base, either before or after polymerization. Suitable comonomers include, but are not limited to, vinyl acetate, acrylonitrile, styrene, acrylic acid and its esters, methacrylic acid and its esters, acrylamide and substituted acrylamides such as acrylamidomethylpropanesulfonic acid, methacrylamide and substituted methacrylamides such as methacrylamidomethylpropanesulfonic acid. The copolymers can also be graft copolymers, such as polyacrylic acid-g-poly(vinyltriethoxysilane) or poly(vinylacetate-co-crotonic acid)-g-poly(vinyltriethoxysilane). These polymers can be made in a variety of solvents such as acetone, tetrahydrofuran, toluene, xylene, and the like. In some cases, the polymer is soluble in the reaction solvent and can be conveniently recovered by stripping off the solvent, or, if the polymer is not soluble in the reaction solvent, the product can be conveniently recovered by filtration; however, any suitable recovery method can be employed. Suitable initiators include 2,2'azobis-(2,4-dimethylvaleronitrile) and 2,2-azobisisobutyronitrile, benzoylperoxide, cumene hydroperoxide, and the like.

In some embodiments the silicon-containing polymers described herein can be made by reacting a compound containing a -Si(OR)₃ group as well as a reactive group which can react with either a pendant group or backbone atom of an existing polymer. Polyamines can be reacted with a variety of compounds containing one or more -Si(OR)₃ groups to give polymers which can be used in the preferred embodiments. The reactive group can be an alkyl halide group, such as chloropropyl, bromoethyl, chloromethyl, bromoundecyl, or other suitable group. The compound containing one or more -Si(OR)₃ groups can contain an epoxy functionality such as glycidoxypropyl, 1,2-epoxyamyl, 1,2-epoxydecyl, or 3,4-epoxycyclo-hexylethyl. The reactive group can also be a combination of a hydroxyl group and a halide, such as 3-chloro-2-hydroxypropyl. The reactive moiety can also contain an isocyanate group, such as isocyanatopropyl or isocyanatomethyl, which reacts to form a urea linkage. In addition, silanes containing anhydride groups, such as triethoxysilylpropylsuccinic anhydride, can be used. The reactions can be carried out either neat or in a suitable solvent. In addition, other functional groups such as alkyl groups can be added by reacting other amino groups or nitrogen atoms on the polymer with alkyl halides, epoxide or isocyanates. The polyamines can be made by a variety of methods. For example, they can be made by a ring opening polymerization of aziridine or similar compounds. They also can be made by condensation reactions of amines such as ammonia, methylamine, dimethylamine, ethylenediamine, or the like with reactive compounds such as 1,2-dichloroethane, epichlorohydrin, epibromohydrin or similar compounds.

Polymers containing anhydride groups can be reacted with a variety of silicon-containing compounds (e.g., containing one or more -Si(OR)₃ groups) to make embodiments of the silicon-containing polymers described herein. Suitable starting polymers include maleic anhydride homopolymer, and copolymers of maleic anhydride with monomers such as styrene, ethylene, methylvinylether, and the like. The starting polymer can also be a graft copolymer such as poly(1,4-butadiene)-g-maleic anhydride or polyethylene-g-maleic anhydride, or the like. Other suitable anhydride monomers include itaconic and citraconic anhydrides. Suitable reactive silane compounds include but are not limited to γ-aminopropyltriethoxysilane, bis(γ-triethoxysilylpropyl)amine, N-phenyl-γ aminopropyltriethoxysilane, p-aminophenyltriethoxysilane, 3-(m-aminophenoxypropyl)-trimethoxysilane, γ-aminobutyltriethoxylsilane, and the like. Other functional groups can be added to the polymer by reacting it with amines, alcohols, and other compounds.

Polymers containing hydroxyl groups can be reacted with an epoxy functionality, such as glycidoxypropyltrimethoxysiliane. Examples of polymers that contain hydroyxl groups include polysaccharides such as starch and hydroxyethylcellulose.

In certain embodiments, the silicon-containing polymer is selected from the group consisting of a silicon-containing polyethyleneimine, a vinyl triethoxysilane copolymer, a copolymer of acrylic and/or methacrylic acid and triethoxysilylpropylacrylamide, a copolymer of acrylic and/or methacrylic acid and triethoxysilylpropylmethacrylamide, a copolymer of acrylic and/or methacrylic acid and triethoxyvinylsilane, a silicon-containing polysaccharide (e.g., a silicon-containing starch or a silicon-containing cellulose such as hydroxyethylcellulose), a silicon-containing styrene/maleic anhydride copolymer, a silicon-containing maleic anhydride/alkyl vinyl ether copolymer (e.g., a silicon-containing maleic anhydride/methyl vinyl ether copolymer), and mixtures thereof.

In an embodiment, the silicon-containing polymer comprises recurring units, the recurring units comprising a first recurring unit having a structure-[CH₂C(R¹)H]- and a second recurring unit having a structure -[CH₁C(R²)H]-, wherein R¹ is -C(=O)O⁻, and wherein R² is -C(=O)NHCH₂CH₂CH₂Si(O⁻)₃. In an embodiment, the amount of the first recurring unit is at least about 70% e.g., at least about 80%, by number based on total number of recurring units in the polymer. In this embodiment, additional hydrogen atoms of the recurring units can be substituted by a pendant group, e.g. a methyl group.

In an embodiment, the silicon-containing polymer comprises recurring units, the recurring units comprising a first recurring unit having a structure-[CH₁C(R¹)H]-, a second recurring unit having a structure -[CH₂C(R²)H]-, a third recurring unit having a structure -[CH₂C(R³)H]-, a fourth recurring unit having a structure -[CH₂C(R⁴)H]-, and, optionally, a fifth recurring unit having a structure-[CH₂C(R⁵)H]-, wherein R¹ is C(=O)NH₂, wherein R² is -C(=O)O⁻, wherein R³ is-C(=O)NHO⁻, wherein R⁴ is -NHCH₂CH(OH)CH₂OCH₂CH₂CH₂Si(O⁻)₃. and wherein R⁵ is -NH₂. In this embodiment, additional hydrogen atoms of the recurring units can be substituted by a pendant group, e.g. a methyl group. In an embodiment, the silicon-containing polymer comprises up to about 50% by number of the first recurring unit, up to about 90% by number of the second recurring unit, from about 1% to about 60% by number of the third recurring unit, from about 1 % to about 30% by number of the fourth recurring unit, and from about 1% to about 30% by number of the fifth recurring unit. In an embodiment, the first recurring unit and the second recurring unit together comprise about 80% to about 85 % by number of the recurring units, the third recurring unit comprises about 5% to about 15 % by number of the recurring units, and the fourth and fifth recurring units together comprise the remainder of the recurring units.

In an embodiment, the silicon-containing polymer comprises recurring units, the recurring units comprising a first recurring unit having a structure-[CH₂C(R¹)H]-, a second recurring unit having a structure -[CH₂C(R²)H]-, a third recurring unit having a structure -[CH₂C(R³)H]-, a fourth recurring unit having a structure -[CH₂C(R⁴)H]-, and, optionally, a fifth recurring unit having a structure-[CH₂C(R⁵)H]-, wherein R¹ is C(=O)NH₂, wherein R² is -C(=O)O⁻, wherein R³ is-C(=O)NHO⁻, wherein R⁴ is -NHC(=O)NHCH₂CH₂CH₂Si(O⁻)₃, and wherein R⁵ is -NH₂. In this embodiment, additional hydrogen atoms of the recurring units can be substituted by a pendant group, e.g. a methyl group. In an embodiment, the first recurring unit and the second recurring unit together comprise about 65% to about 70 % by number of the recurring units, the third recurring unit comprises about 20 to about 30 % by number of the recurring units, and the fourth and fifth recurring units together comprise the remainder of the recurring units.

In an embodiment, the silicon-containing polymer comprises recurring units, the recurring units comprising a first recurring unit having a structure-[CH₂C(R¹)H]-, a second recurring unit having a structure -[CH₂C(R²)H]-, a third recurring unit having a structure -[CH₂C(R³)H]-, and a fourth recurring unit having a structure -[CH₂C(R⁴)H]-, wherein R¹ is C(=O)NH₂, wherein R² is -C(=O)O⁻, wherein R³ is -C(=O)NHO⁻, wherein R⁴ is -C(=O)NHCH₂CH₂CH₂Si(O⁻)₃. In this embodiment, additional hydrogen atoms of the recurring units can be substituted by a pendant group, e.g. a methyl group. In an embodiment, the first recurring unit comprises 0 % to 40 %, the second recurring unit comprises 10 % to 85 % by number of the recurring units, the third recurring unit comprises 1 % to about 25 % by number of the recurring units, and the fourth recurring units comprises 1 % to about 25% by number of the recurring units.

The flocculant compositions and methods for using them described herein can include any suitable flocculant or combinations of flocculants. For example, an embodiment provides a flocculant composition, comprising a silicon-containing polymer flocculant as described herein (e.g., a silicon-containing polymer flocculant for calcium silicates, calcium aluminosilicates, calcium titanate, titanium dioxide and combinations thereof) and a polymer flocculant for Bayer or Sinter process mud. In an embodiment, the polymer flocculant for the Bayer or Sinter process mud can be an anionic polymeric flocculant. In an embodiment, the weight ratio of the amount of the silicon-containing polymer flocculant to the amount of the polymeric flocculant in the flocculant composition is in the range of about 100:1 to about 1:10, e.g., in the range of about 10:1 to about 1:2, such as about 1:1.

Polymeric flocculants useful in processes for digesting bauxite ore, such as the Bayer and Sinter processes include anionic polymers known by those skilled in the art to be useful as polymer flocculants for Bayer and Sinter process mud. Examples of useful anionic polymer flocculants include homo-polymers of acrylic acid or acrylates; copolymers of acrylic acid or acrylate monomers; homo-polymers of methacrylic acid or methacrylates; copolymers of methacrylic acid or methacrylate monomers; polyacrylamides, alkali metal, alkaline earth metal or ammonium salts of said acids; polymers containing hydroxamic acid or salt groups; or a combination of any of the foregoing. In an embodiment, the anionic polymeric flocculant is a hydroxamated polymer, e.g., a hydroxamated polyacrylamide. The amount of anionic recurring units in the anionic polymer may vary over a broad range. For example, in an embodiment, the anionic polymeric flocculant comprises at least about 50% anionic recurring units. Weight average molecular weights of anionic polymer flocculants are typically about 1,000 or greater, e.g., about 10,000 or greater; about 100,000 or greater; about 1,000,000 or greater, or about 5,000,000 or greater. In some embodiments, molecular weights are 30,000,000 or less. Those skilled in the art will appreciate that the foregoing provides descriptions of ranges between each of the stated values, and thus will understand, for example, that the anionic polymer flocculant may have a weight average molecular weight of from about 5,000,000 to about 30,000,000.

Other types of flocculants commonly employed in processes for digesting bauxite ore to produce alumina such as the Bayer and Sinter processes include nonionic flocculants such as starch (e.g., pregelatinized, from corn or potato), polysaccharides, alginates, dextran or flour. While anionic flocculants are particularly preferred for use in the Bayer and Sinter processes, selected cationic, nonionic, or amphoteric flocculants can also be advantageously employed in suitable amounts, as will be appreciated by one skilled in the art.

Flocculant compositions, including those containing a silicon-containing polymer flocculant as described herein (e.g., a silicon-containing polymer flocculant for calcium silicates, calcium aluminosilicates, calcium titanate, and titanium dioxide) and/or a polymer flocculant for Bayer or Sinter process mud, may be concentrated or diluted (e.g., in water), and may include additional ingredients. It will be appreciated by those skilled in the art that bauxite ore process sites are often located far from flocculant manufacturers, and thus it is often desirable to transport the flocculant composition to the process site in a relatively concentrated form in order to minimize shipping costs. The concentrated flocculant composition can then be conveniently diluted in an aqueous medium on site to form a dilute flocculant composition, at or about the time that it is to be used. The aqueous medium with which the concentrated flocculant composition is diluted may be water in a relatively pure form, recycled water from various sources, or an aqueous process stream from a process to digest bauxite ore to produce alumina.

In view of the foregoing, those skilled in the art will appreciate that a flocculant composition, including those containing a silicon-containing polymer flocculant as described herein and/or a polymer flocculant for Bayer or Sinter process mud, may be formed during manufacture (e.g., in a relatively concentrated form) and/or prior to use, e.g., by on site intermixing with an aqueous medium, and that it may contain additional components. Examples of additional components include water, salts, stabilizers, and pH adjusting agents, as well as ingredients such as calcium silicates, calcium aluminosilicates, calcium titanate, titanium dioxide and Bayer or Sinter process mud. In an embodiment, at least a portion of the calcium silicates, calcium aluminosilicates, calcium titanate, or titanium dioxide are suspended in the flocculant composition. The concentration of any particular polymer flocculant in a flocculant composition may vary over a broad range, e.g., from about 0.1 part per million to about 100 % (e.g., highly concentrated form containing little or no water). For relatively dilute flocculant compositions, examples of suitable concentrations of the (anionic) polymer flocculant in the flocculant composition include amounts in the range of from about 0.1 part per million to about 1,000 parts per million, and examples of suitable concentrations of the silicon-containing polymeric flocculant in the flocculant composition include amounts in the range of from about one part per million to about 500 parts per million. For flocculant compositions containing multiple polymer flocculant components, including those containing a silicon-containing polymer flocculant as described herein (e.g., a silicon-containing polymer flocculant for calcium silicates, calcium aluminosilicates, calcium titanate, and titanium dioxide) and a polymer flocculant for Bayer or Sinter process mud, it will be appreciated that the components can be combined at or near the time or manufacture and/or shipping, or combined at or near the time of use, e.g., on site in the vicinity of a bauxite ore process stream.

The polymer flocculants and flocculant compositions described herein are useful as flocculants. For example, an embodiment provides a flocculation method, comprising intermixing a silicon-containing polymer flocculant and/or flocculant composition as described herein with a process stream such as a Bayer or Sinter process stream in an amount effective to flocculate at least a portion of solids suspended therein. In an embodiment, the suspended solids include one or more of calcium silicate, calcium aluminosilicate, calcium titanate and/or titanium dioxide. Another embodiment provides a flocculation method, comprising intermixing a silicon-containing polymer flocculant with a process stream in an amount effective to thereby flocculate at least a portion of calcium silicate, calcium aluminosilicate, calcium titanate, titanium dioxide and/or combinations thereof particles suspended therein; and separating at least a portion of the flocculated calcium silicate, calcium aluminosilicate, calcium titanate, and/or titanium dioxide thus formed.

An embodiment provides a method of reducing the level of suspended solids in a process stream wherein bauxite ore is digested to produce alumina whereby a polymer with the pendant group or end group containing - Si(OR)₃ is added alone, subsequent to, followed by, or in association with a conventional flocculant in order to effectively flocculate the suspended solids so that they can be conveniently separated from the process stream. The amount of reduction in suspended solids content can be measured and compared with controls, which generally comprise state-of-the-art alumina process samples. The amounts of polymer flocculant(s) effective to flocculate a particular type of solids in a particular Bayer and/or Sinter process stream can be determined by routine experimentation informed by the guidance provided herein. The amount of flocculant is often in the range of from about 0.01 lb. to about 40 lbs. of flocculant per ton of solids (dry basis), e.g., in various ranges from about 0.1, 0.2, 0.3, 0.4, 0.5, 0.6, 0.7, 0.8, or 0.9 lb. to about 15, 20, 25, 30, or 35 lbs. Those skilled in the art will appreciate that the foregoing provides descriptions of ranges between each of the stated values, and thus will understand, for example, that the polymer flocculant can be used in an amount in the range of from about 1 lb. to about 10 lbs. of flocculant per ton of solids (dry basis).

In an embodiment, the process stream comprises suspended calcium silicate, calcium aluminosilicate and/or calcium titanate particles, e.g., from about 0.5 grams per liter to about 200 grams per liter of suspended calcium silicate, calcium aluminosilicate and/or calcium titanate particles. As illustrated in the examples below, in some embodiments the polymer flocculants and flocculant compositions described herein are particularly useful for flocculating suspended calcium silicate, calcium aluminosilicate and/or calcium titanate particles in these process streams where more than 1 %, e.g. more than 5 %, by weight (calculated as CaO) of lime or another source of calcium, such as for example CaCO₃ and Ca(OH)₂ was added.

In the context of commercial plant operation, the polymer flocculants and/or flocculant compositions can be added to the settler feed, as are the polymeric flocculants described above. Alternatively, the polymers can be added to the overflow from a primary settler or to the blow-off from the digesters. The polymers can also be used in the settling of solids in the mud washing circuit or a desilication settler. The polymers, alone or in combination with other process chemicals, can advantageously be added at other points in the commercial plant operation as well.

### EXAMPLES

### Test Procedure

A synthetic liquor is made by adding 342 g sodium aluminate, 60 g sodium hydroxide, and 40 g sodium carbonate to water to make a total of 1000 ml and it is heated to 100°C.

Calcium aluminosilicate is made by adding 250 g sodium aluminate, 13 g calcium hydroxide and 0.8 g sodium silicate to water to make a total of 1000 ml and heating to 90°C, followed by filtration, washing, and drying to recover dry calcium aluminosilicate. Calcium silicate is made by combining 200 g calcium carbonate and 60 g silicon dioxide and heating to 1200°C. Red mud solids are obtained from mud slurry typically being discharged to waste at an operating bauxite ore processing plant. This mud is washed free of the associated dilute sodium aluminate solution, dried and ground.

For the settling tests on synthetic substrates, either calcium silicate, calcium aluminosilicate, or calcium titanate alone or mixtures of calcium aluminosilicate, calcium titanate, titanium dioxide and red mud solids representing Bayer and Sinter process streams are dispersed in the above liquor, generally to give a slurry containing about 40 g/l of suspended solids. Dilute reagent is mixed into the slurry contained in a graduated cylinder, using a perforated plunger, and the time to settle a fixed distance is measured so that a settling rate for the flocculated solids could be calculated. Also, after thirty minutes a sample of the supernatant liquor is taken and filtered; the solids collected on the filter are then washed and dried to give a measure of the supernatant clarity.

Evaluation of the reagents at a bauxite refinery can also be achieved by obtaining a well mixed sample of settler feed slurry. Dilute reagent is mixed into slurry contained in a graduated cylinder, using a perforated plunger, and the time to settle a fixed distance is measured so that a settling rate for the flocculated solids could be calculated. Also, after twenty minutes a sample of the supernatant liquor is taken and filtered; the solids collected on the filter are then washed and dried to give a measure of the supernatant clarity. As an alternative, the turbidity of the overflow liquor is considered to be an indirect measurement of overflow solids (supernatant clarity).

### Example 1a - Reagent A

The copolymer of styrene and maleic anhydride is prepared as follows. 53.39 g of maleic anhydride is added to 877 g of toluene into a jacketed reactor. The mixture is heated slightly (below 35 °C) under agitation to dissolve the maleic anhydride. 60.61 g of styrene is then added. The solution is purged with nitrogen for 45 minutes increasing the temperature gradually to 60 °C. The mixture is kept under a nitrogen blanket throughout the entire polymerization process. 3 g of lauryl peroxide is added to initiate the polymerization. The mixture is heated to a temperature between 70 °C and 75 °C where it is held for 6 hours. The product is allowed to cool to room temperature before discharge. The product is washed twice with toluene and dried under vacuum to yield poly(styrene-co-maleic anhydride).

20 g of poly(styrene-co-maleic anhydride) (74.7% polymer solids) is suspended in 135.82 g of toluene and heated to 50 °C. A solution of 0.39 g of dipropylamine (DPA) and 5.11 g of 3-aminopropyltriethoxysilane in 23.96 g of toluene is added under agitation over a period of 10 minutes at 50 °C. The mixture is refluxed for 30 minutes. After the temperature is decreased to below 50 °C, the mixture is slowly added to 277.88 g of a 6% sodium hydroxide solution under agitation. The solution is stirred gently for 60 minutes before being transferred to a separatory funnel. Allow complete separation of aqueous (caustic) phase from the toluene phase and the product in the aqueous phase is collected to yield Reagent A.

### Example 1b - Reagent B

The silane monomer N-(3-triethoxysilyl)propylmethylacrylamide is prepared as follows. 6.1 g of 3-aminopropyltriethoxysilane and 0.62 g of tert-octylamine are added to 17.5 g of THF and placed in an ice-water bath. Under high agitation 5.21 g of methacrylic anhydride is added dropwise to the solution. After the addition, the mixture is removed from the ice-water bath and held at room temperature for 3 hrs with continued stirring. 29.17 g of a 20% sodium hydroxide solution is added while keeping the temperature below 10 °C during the addition of sodium hydroxide solution. After the caustic addition is completed, allow the solution to stir at room temperature for one hour. THF and ethanol are removed by rotary evaporator before use.

The solution is cooled to below 2 °C in an ice-water bath and 1.98 g of acrylic acid is added. The solution is mixed and 0.096 g of 1% aqueous solution of ammonium persulfate is added, followed by 0.138 g of a 5% aqueous solution of azobis(4cyanovaleric acid) (Wako V-501 available from Wako Chemicals USA, Inc. of Richmond, Virginia, USA). The solution is sealed with a septum and sparged with nitrogen for 45 minutes at 2 °C. 0.096 g of 1% aqueous solution of sodium formaldehydesulfoxylate is then added to initiate the polymerization. The reaction temperature is allowed to rise to the peak temperature, the reactor is placed in a 50 °C oil bath and the polymerization is carried out for 10 hours to yield Reagent B. The gel product is allowed to cool to room temperature before discharge and is dissolved in a caustic (2% sodium hydroxide) solution for performance testing.

### Example 1c - Reagent C

5 g of polyethyleneimine (molecular weight 25,000 obtained from Aldrich Chemicals) is mixed with 1.10 g of glycidyloxy propyltrimeythoxysilane and 0.43 g of 2-ethylhexyl glycidyl ether in a reactor. The components are thoroughly mixed and heated at 75 °C for 16 hours. After cooling to room temperature, 26.12 g of a 2% sodium hydroxide solution is added to the reactor and heated to 75 °C with stirring to prepare a 20% solution of Reagent C.

### Example 1d - Reagent D

The silane monomer N-(3-triethoxysilyl)propylacrylamide is prepared as follows. 197.4 g of 3-aminopropyltriethoxysilane and 89.9 g of triethylamine are dissolved in 330 g of THF, purged with nitrogen and cooled to 0°C. With mixing, 83.9 g of acryloyl chloride is added dropwise. After the addition, the mixture is heated to 40°C for 2 hrs. The mixture is colled to room temperature and the salt filtered out. The solvent THF is removed by rotary evaporator before use.
28.65 g of 45% potassium hydroxide solution and 1.60 g of de-ionized water are added into the reactor. The reactor is placed in an ice-water bath and 13.65 g of acrylic acid is slowly added into the reactor while stirring. The temperature is kept below 35 °C during acrylic acid addition. 4.63 g of the silane monomer, N-(3-triethoxysilyl)propylacrylamide, is then added. The solution is mixed well until all silane monomer is dissolved. The monomer solution is placed in an ice-water bath and sparged with nitrogen for 30 minutes and cooled to 0 °C. Nitrogen is purged throughout the entire polymerization process. After 30 minutes of nitrogen purge, 3.05 g of a 1% aqueous solution of azobis(4cyanovaleric acid) (Wako V-501 available from Wako Chemicals USA, Inc. of Richmond, Virginia, USA) is added. After 15 minutes, 0.24 g of a 0.5% aqueous solution of ammonium persulfate is charged, followed by 0.24 g of 0.5% aqueous solution of sodium formaldehydesulfoxylate and the solution is mixed thoroughly. After 30 minutes the reactor is placed in a 75 °C bath and the polymerization is carried out for 5 hours at 75 °C to yield Reagent D. The product is dissolved in caustic (2% sodium hydroxide) solution for performance testing.

### Example 1e - Reagent E

The copolymer of styrene and maleic anhydride is prepared as follows. 53.39 g of maleic anhydride is added to 765 g of toluene into a jacketed reactor. The mixture is heated slightly (below 35 °C) under agitation to dissolve the maleic anhydride. 60.61 g of styrene is then added. The solution is purged with nitrogen for 45 minutes increasing the temperature gradually to 65 °C. The mixture is kept under a nitrogen blanket throughout the entire polymerization process. 0.3 g of lauryl peroxide is added to initiate the polymerization. The mixture is heated to a temperature between 65 °C and 70 °C where it is held for 6 hours. The product is allowed to cool to room temperature before discharge. The product is washed twice with toluene and dried under vacuum to yield poly(styrene-co-maleic anhydride).

7 g of poly(styrene-co-maleic anhydride) (89% polymer solids) is suspended in 90 g of toluene and heated to 50 °C. A solution of 0.18 g of dipropylamine (DPA) and 1.78 g of 3-aminopropyltriethoxysilane in 8.39 g of toluene is added under agitation over a period of 2 minutes at 50 °C. The mixture is refluxed for 30 minutes. After the temperature is decreased to below 30 °C, a solution containing 2.32 g of glycinamide hydrochloride, 5 g de-ionized water and 2.32 g of 50% sodium hydroxide is added under agitation. The mixture is heated to 75 °C for one hour and allowed to cool to room temperature. A hydroxamation solution is prepared in a separate reactor by dissolving 0.16 g of anhydrous sodium thiosulfate in 5.63 g of a 30% hydroxylamine sulfate solution. The hydroxamation solution is diluted by adding 15 g of water, followed by 6.16 g of 50% sodium hydroxide under high agitation in an ice water bath. The poly(styrene-co-maleic anhydride) mixture is then slowly added to the hydroxamation solution under agitation. After 15 hours of continuous agitation at room temperature, 50.5 g of de-ionized water is added and stirred for 20 minutes before being transferred to a separatory funnel. Allow complete separation of the aqueous (caustic) phase from the toluene phase and the product in the aqueous phase is collected to yield Reagent E.

The effectiveness of Reagents A through E without added flocculant is tested in a calcium aluminosilicate slurry and exhibits improved clarity, as demonstrated by the data in Table 1. A significant improvement in clarity is observed for Reagents A through E. The effectiveness of Reagents A through E in enhancing flocculation when employed in combination with commercially available flocculants is also tested. The commercial flocculants tested included SUPERFLOC^{®} HX-200, a hydroxamate-based flocculant based on polyacrylamide, and SUPERFLOC^{®} 1227, an ammonium polyacrylate flocculant, both available from Cytec Industries Inc. of West Paterson, New Jersey, USA. Reagents A through E in combination with SUPERFLOC^{®} HX-200 flocculant produce significantly larger flocs resulting in an increased settling rate when compared to flocculant alone, or flocculant in combination with SUPERFLOC^{®} 1227. Clarity is also substantially improved when Reagents A through E are employed in combination with SUPERFLOC^{®} HX-200.

**Table 1.**

| | Reagent | Dosage (ppm) | Settling Rate (m/h) | Clarity (g/l) |
|---|---|---|---|---|
| 1 | None | 0 | No floc^{a} | 12.81 |
| 2 | A | 20 | Cloudy | 7.56 |
| 3 | A | 40 | Cloudy | 6.77 |
| 4 | A/HX-200^{b} | 20/10 | 8.6 | 1.41 |
| 5 | A/HX-200^{b} | 10/10 | 9.4 | 1.48 |
| 6 | A/SF1227^{c} | 20/4 | Cloudy | 4.90 |
| 7 | A/SF1227^{c} | 10/4 | Cloudy | 3.45 |
| 8 | B | 20 | Cloudy | 2.99 |
| 9 | B | 40 | Cloudy | 1.26 |
| 10 | B/HX-200^{b} | 20/10 | 7.7 | 1.35 |
| 11 | B/HX-200^{b} | 10/10 | 5.1 | 3.39 |
| 12 | B/SF1227^{c} | 20/4 | Cloudy | 2.43 |
| 13 | B/SF1227^{c} | 10/4 | Cloudy | 3.21 |
| 14 | C | 20 | Cloudy | 0.92 |
| 15 | C | 40 | Cloudy | 0.63 |
| 16 | C/HX-200^{b} | 20/10 | 9.4 | 0.71 |
| 17 | C/HX-200^{b} | 10/10 | 10.3 | 1.09 |
| 18 | C/SF1227^{c} | 20/4 | Cloudy | 1.47 |
| 19 | C/SF1227^{c} | 10/4 | Cloudy | 1.42 |
| 20 | D | 20 | Cloudy | 5.22 |
| 21 | D | 40 | Cloudy | 7.13 |
| 22 | D/HX-200^{b} | 20/10 | 4.2 | 1.29 |
| 23 | D/HX-200^{b} | 10/10 | 4.9 | 2.11 |
| 24 | D/SF1227^{c} | 20/4 | Cloudy | 4.08 |
| 25 | D/SF1227^{c} | 10/4 | Cloudy | 2.08 |
| 26 | E | 20 | Cloudy | 10.55 |
| 27 | E | 40 | Cloudy | 11.25 |
| 28 | E/HX-200^{b} | 20/10 | 2.7 | 2.55 |

| | | | | |
|---|---|---|---|---|
| ^{a}No flocculation ^{b}SUPERFLOC^{®} HX-200 flocculant ^{c}SUPERFLOC^{®} 1227 flocculant | | | | |

### Example 2 - Reagent F

15.28 g of Scripset 520 (a styrene-maleic anhydride copolymer made by Hercules Inc., Wilmington, Delaware, USA) is suspended in 140.88 g of toluene. The mixture is purged with nitrogen and heated under agitation to 50 °C. A solution of 5.11 g of aminopropyltriethoxysilane and 0.39 g of dipropylamine in 23.96 g of toluene is added under agitation over a period of 5 minutes at 50 °C. The mixture is refluxed for 30 minutes. After the temperature is decreased to below 40 °C, the mixture is slowly added to 260.16 g of a 4% sodium hydroxide solution under agitation. The solution is stirred gently for 60 minutes before being transferred to a separatory funnel. Allow complete separation of aqueous (caustic) phase from the toluene phase and the product in the aqueous phase is collected to yield Reagent F.

The effectiveness of Reagent F is tested in a Sinter desilication plant slurry and the data are presented in Table 2. Flocculation is observed for Reagents F without added flocculant. The effectiveness of Reagent F in enhancing flocculation when employed in combination with a commercially available flocculant is also tested. The commercial flocculant tested included SUPERFLOC^{®} HX-600, a hydroxamate-based flocculant based on polyacrylamide, available from Cytec Industries Inc. of West Paterson, New Jersey, USA. Turbidity is improved when Reagent F is employed in combination with HX-600.

**Table 2.**

| | Reagent | Dosage (ppm) | Settling Rate (m/h) | Turbidity (NTU) |
|---|---|---|---|---|
| 29 | HX-600^{a} | 8 | 13.7 | 96 |
| 30 | F | 20 | 3.0 | 278 |
| 31 | F/HX-600^{a} | 2/8 | 10.8 | 39 |

| | | | | |
|---|---|---|---|---|
| ^{a}SUPERFLOC^{®} HX-600 flocculant | | | | |

### Example 3

Reagents A through E are subjected to further testing on calcium titanate slurry, yielding data presented in Table 3. The effectiveness of Reagents A through E without added flocculant exhibits improved clarity at dosages of 20 and 40 ppm. Improved clarity is also achieved when Reagents A through E are employed in combination with SUPERFLOC^{®} HX-200 and SUPERFLOC^{®} 1227 (both available from Cytec Industries, W. Paterson, NJ), as demonstrated by the data in Table 3.

**Table 3.**

| | Reagent | Dosage (ppm) | Settling Rate (m/h) | Clarity (g/l) |
|---|---|---|---|---|
| 32 | None | 0 | No floc^{a} | 9.86 |
| 33 | A | 20 | Cloudy | 0.84 |
| 34 | A | 40 | Cloudy | 0.48 |
| 35 | A/HX-200^{b} | 20/10 | 21.6 | 0.52 |
| 36 | A/HX-200^{b} | 40/10 | 18 | 0.68 |
| 37 | A/SF1227^{c} | 20/4 | 18 | 0.48 |
| 38 | A/SF1227^{c} | 40/4 | 10.8 | 0.58 |
| 39 | B | 20 | 4.9 | 0.32 |
| 40 | B | 40 | 5.0 | 0.50 |
| 41 | B/HX-200^{b} | 20/10 | 15.4 | 0.28 |
| 42 | B/HX-200^{b} | 10/10 | 15.4 | 0.22 |
| 43 | B/SF1227^{c} | 20/4 | 12.7 | 0.26 |
| 44 | B/SF1227^{c} | 10/4 | 14.4 | 0.28 |
| 45 | C | 20 | Cloudy | 3.24 |
| 46 | C | 40 | Cloudy | 1.87 |
| 47 | C/HX-200^{b} | 20/10 | 19.6 | 0.36 |
| 48 | C/HX-200^{b} | 40/10 | 21.6 | 0.30 |
| 49 | C/SF1227^{c} | 20/4 | 18.0 | 0.35 |
| 50 | C/SF1227^{c} | 40/4 | 18.0 | 0.24 |
| 51 | D | 20 | 3.1 | 0.45 |
| 52 | D | 40 | 4.0 | 0.73 |
| 53 | D/HX-200^{b} | 20/10 | 10.8 | 0.59 |
| 54 | D/HX-200^{b} | 10/10 | 16.6 | 0.33 |
| 55 | D/SF1227^{c} | 20/4 | 12.0 | 0.63 |
| 56 | D/SF1227^{c} | 10/4 | 13.5 | 6.07 |
| 57 | E | 20 | Cloudy | 2.90 |
| 58 | E | 40 | Cloudy | 1.59 |
| 59 | E/HX-200^{b} | 20/10 | 2.4 | 0.63 |

| | | | | |
|---|---|---|---|---|
| ^{a}No flocculation ^{b}SUPERFLOC^{®} HX-200 flocculant ^{c}SUPERFLOC^{®} 1227 flocculant | | | | |

### Example 4

Reagents A through E are subjected to further testing on calcium silicate slurry, yielding data presented in Table 4. As demonstrated by the data, Reagents A through E improve the flocculation of calcium silicate slurry without added flocculant resulting in improved clarity at dosages of 20 and 40 ppm. When employed in combination with SUPERFLOC^{®} HX-200 and SUPERFLOC^{®} 1227 (both available from Cytec Industries, W. Paterson, NJ), Reagents A through E improve settling rate and clarity, as demonstrated by the data in Table 4.

**Table 4.**

| | Reagent | Dosage (ppm) | Settling Rate (m/h) | Clarity (g/l) |
|---|---|---|---|---|
| 60 | None | 0 | No floc^{a} | 4.48 |
| 61 | A | 20 | Cloudy | 0.34 |
| 62 | A | 40 | Cloudy | 0.30 |
| 63 | A/HX-200^{b} | 20/10 | 14.4 | 0.30 |
| 64 | A/HX-200^{b} | 10/10 | 12.0 | 0.32 |
| 65 | A/SF1227^{c} | 20/4 | 10.8 | 0.42 |
| 66 | A/SF1227^{c} | 7.5/4 | 18.0 | 0.40 |
| 67 | B | 20 | 4.5 | 0.37 |
| 68 | B | 40 | 5.1 | 0.30 |
| 69 | B/HX-200^{b} | 20/10 | 11.4 | 0.21 |
| 70 | B/HX-200^{b} | 10/10 | 13.5 | 0.30 |
| 71 | B/SF1227^{c} | 20/4 | 12.7 | 0.34 |
| 72 | B/SF1227^{c} | 10/4 | 14.4 | 0.31 |
| 73 | C | 20 | Cloudy | 0.22 |
| 74 | C | 40 | Cloudy | 0.22 |
| 75 | C/HX-200^{b} | 20/10 | 16.6 | 0.17 |
| 76 | C/HX-200^{b} | 10/10 | 13.5 | 0.20 |
| 77 | C/SF1227^{c} | 10/4 | 14.4 | 0.31 |
| 78 | C/SF1227^{c} | 5/4 | 18.0 | 0.32 |
| 79 | D | 20 | 4.3 | 0.46 |
| 80 | D | 40 | Cloudy | 0.43 |
| 81 | D/HX-200^{b} | 20/10 | 10.8 | 0.29 |
| 82 | D/HX-200^{b} | 10/10 | 10.8 | 0.27 |
| 83 | D/SF1227^{c} | 20/4 | Very fast | 0.48 |
| 84 | D/SF1227^{c} | 10/4 | 13.5 | 0.45 |
| 85 | E | 40 | Cloudy | 3.91 |
| 86 | E/HX-200^{b} | 20/10 | 7.2 | 0.50 |

| | | | | |
|---|---|---|---|---|
| ^{a}No flocculation ^{b}SUPERFLOC^{®} HX-200 flocculant ^{c}SUPERFLOC^{®} 1227 flocculant | | | | |

### Example 5

Reagents A through E are subjected to further testing on slurry representing a process stream from the digestion of diasporic bauxite. The substrate is a mixture of calcium aluminosilicate, calcium titanate and mud solids obtained from an operating plant. The data are presented in Table 5. A significant improvement in clarity is observed for the combination of Reagents A through E and commercial flocculant. Also demonstrated by the data, Reagents A through E are very effective in flocculating calcium aluminosilicate and calcium titanate particles even without added commercial flocculant.

**Table 5.**

| | Reagent | Dosage (ppm) | Settling Rate (m/h) | Clarity (g/l) |
|---|---|---|---|---|
| 87 | None | 0 | No floc^{a} | 8.82 |
| 88 | A | 20 | Cloudy | 1.08 |
| 89 | A | 40 | Cloudy | 0.97 |
| 90 | A/HX-200^{b} | 20/15 | 10.8 | 0.91 |
| 91 | A/HX-200^{b} | 10/15 | 12 | 0.78 |
| 92 | A/SF1227^{c} | 20/5 | Cloudy | 0.96 |
| 93 | A/SF1227^{c} | 10/5 | 6.2 | 0.87 |
| 94 | B | 20 | 5.1 | 0.75 |
| 95 | B | 40 | 6.0 | 0.94 |
| 96 | B/HX-200^{b} | 20/15 | 12.0 | 0.70 |
| 97 | B/HX-200^{b} | 10/15 | 10.8 | 0.60 |
| 98 | B/SF1227^{c} | 20/5 | 12.0 | 1.05 |
| 99 | B/SF1227^{c} | 10/5 | 9.0 | 0.96 |
| 100 | C | 20 | Cloudy | 1.14 |
| 101 | C | 40 | Cloudy | 0.84 |
| 102 | C/HX-200^{b} | 20/15 | 12.0 | 0.54 |
| 103 | C/HX-200^{b} | 10/15 | 14.4 | 0.66 |
| 104 | C/SF1227^{c} | 20/5 | 14.4 | 0.68 |
| 105 | C/SF1227^{c} | 10/5 | 9.4 | 0.74 |
| 106 | D | 20 | Cloudy | 1.70 |
| 107 | D | 40 | Cloudy | 0.97 |
| 108 | D/HX-200^{b} | 20/15 | 10.8 | 0.97 |
| 109 | D/HX-200^{b} | 10/15 | 10.8 | 3.16 |
| 110 | D/SF1227^{c} | 20/5 | Cloudy | 1.02 |
| 111 | D/SF1227^{c} | 10/5 | Cloudy | 0.96 |
| 112 | E | 20 | Cloudy | 2.94 |
| 113 | E | 40 | Cloudy | 3.05 |
| 114 | E/HX-200^{b} | 10/15 | 5.4 | 1.32 |

| | | | | |
|---|---|---|---|---|
| ^{a}No flocculation ^{b}SUPERFLOC^{®} HX-200 flocculant ^{c}SUPERFLOC^{®} 1227 flocculant | | | | |

### Example 6

Reagents A and F are subjected to further testing using settler feed from a bauxite refinery processing diasporic bauxite. The data are presented in Table 6. The effectiveness of Reagents A and F in enhancing flocculation when employed in combination with a commercially available flocculant is tested. The commercial flocculants tested included SUPERFLOC^{®} HX-2000, a hydroxamate-based flocculant based on polyacrylamide, available from Cytec Industries Inc. of West Paterson, New Jersey, USA, and a conventional high molecular weight polyacrylate-based flocculant. Improved clarity is achieved when Reagents A and F are employed in combination with commercially available flocculants, as demonstrated by the data in Table 6.

**Table 6.**

| | Reagent | Dosage (ppm) | Settling Rate (m/h) | Clarity (g/l) |
|---|---|---|---|---|
| 115 | HX-2000^{a} | 12 | 2.6 | 1.20 |
| 116 | HX-2000^{a} | 20 | 2.6 | 0.87 |
| 117 | A/HX-2000^{a} | 2/12 | 1.8 | 0.67 |
| 118 | F/HX-2000^{a} | 2/12 | 2.0 | 0.85 |
| 119 | A/HX-2000^{a} | 5/12 | 1.6 | 0.54 |
| 120 | F/HX-2000^{a} | 5/12 | 1.6 | 0.57 |
| 121 | A/HX-2000^{a} | 10/12 | 1.3 | 0.40 |
| 122 | F/HX-2000^{a} | 10/12 | 1.3 | 0.49 |
| 123 | PAA^{b} | 8 | 1.6 | 1.26 |
| 124 | PAA^{b} | 16 | 2.2 | 0.97 |
| 125 | A/PAA^{b} | 10/8 | 0.8 | 0.60 |
| 126 | F/PAA^{b} | 10/8 | 1.0 | 0.57 |
| 127 | A/PAA^{b} | 5/8 | 0.9 | 0.57 |
| 128 | F/PAA^{b} | 5/8 | 1.2 | 0.44 |
| 129 | A/PAA^{b} | 2/8 | 1.5 | 0.93 |
| 130 | F/PAA^{b} | 2/8 | 1.6 | 0.71 |
| 131 | A/PAA^{b} | 1/12 | 1.9 | 0.60 |
| 132 | F/PAA^{b} | 1/12 | 2.5 | 0.72 |

| | | | | |
|---|---|---|---|---|
| ^{a}SUPERFLOC^{®} HX-2000 flocculant ^{b}Conventional polyacrylate-based flocculant | | | | |

### Example 7

The effectiveness of Reagent A in enhancing flocculation in slurries containing titanium dioxide/red mud and calcium aluminosilicate/red mud mixtures when employed in combination with a commercially available flocculant is tested. The commercial flocculant tested is SUPERFLOC^{®} HX-400, a hydroxamate-based flocculant based on polyacrylamide available from Cytec Industries Inc. of West Paterson, New Jersey, USA. As demonstrated by the data presented in Table 7, Reagent A in combination with flocculant improves clarity when compared to the commercial flocculant alone for the 10/90 anatase/red mud mixture and both the 10/90 and 20/80 calcium aluminosilicate/red mud mixtures.

**Table 7.**

| | Suspended Solids | Reagent | Dosage (ppm) | Settling Rate (m/h) | Clarity (g/l) |
|---|---|---|---|---|---|
| 133 | 10%/90% Titanium dioxide / red mud | HX-400^{a} | 15 | 30.9 | 0.52 |
| 134 | 10%/90% Titanium dioxide / red mud | A/HX-400^{a} | 5/15 | 36.0 | 0.28 |
| 135 | 10%/90% Calcium aluminosilicate / red mud | HX-400^{a} | 15 | 27.0 | 0.48 |
| 136 | 10%/90% Calcium aluminosilicate / red mud | A/HX-400^{a} | 5/15 | 21.6 | 0.47 |
| 137 | 20%/80% Calcium aluminosilicate / red mud | HX-400^{a} | 15 | 21.6 | 0.36 |
| 138 | 20%/80% Calcium aluminosilicate / red mud | A/HX-400^{a} | 5/15 | 19.6 | 0.33 |

| | | | | | |
|---|---|---|---|---|---|
| ^{a}SUPERFLOC^{®} HX-400 flocculant | | | | | |

### Example 8

Reagent A is subjected to further testing using settler feed from a refinery processing bauxite by the Bayer-Sweetening Process, in which diasporic bauxite is digested at about 250°C, followed by injection of a gibbsitic bauxite while returning the slurry to atmospheric pressure (flashing). The data are presented in Table 8. The effectiveness of Reagent A in enhancing flocculation when employed in combination with a commercially available flocculant is tested. The commercial flocculant tested included a conventional high molecular weight polyacrylate-based flocculant. Improved clarity and improved settling rate are achieved when Reagent A is employed in combination with commercially available flocculants, as demonstrated by the data in Table 8.

**Table 8.**

| | Reagent | Dosage (ppm) | Settling Rate (m/h) | Clarity (g/l) |
|---|---|---|---|---|
| 139 | PAA^{a} | 6 | 3.8 | 6.0 |
| 140 | PAA^{a} | 8 | 7.6 | 5.0 |
| 141 | PAA^{a} | 16 | 11.9 | 1.8 |
| 142 | A/PAA^{a} | 2/8 | 14.7 | 2.0 |
| 143 | A/PAA^{a} | 5/8 | 12.7 | 2.0 |
| 144 | A/PAA^{a} | 10/8 | 12.7 | 1.4 |
| 145 | A/PAA^{a} | 2/6 | 8.3 | 2.9 |
| 146 | A/PAA^{a} | 5/6 | 6.6 | 3.6 |
| 147 | A/PAA^{a} | 10/6 | 3.5 | 2.8 |

| | | | | |
|---|---|---|---|---|
| ^{a}Conventional polyacrylate-based flocculant | | | | |

### Example 9

Reagent A is subjected to further testing using settler feed from a bauxite refinery processing boehmitic bauxite. The data are presented in Table 9. The effectiveness of Reagent A in enhancing flocculation when employed in combination with a commercially available flocculant is tested. The commercial flocculants tested included a conventional starch flocculant and a conventional high molecular weight polyacrylate-based flocculant. Improved clarity is achieved when Reagent A is employed in combination with commercially available flocculants, as demonstrated by the data in Table 9. An increase in settling rate was also achieved when Reagent A is used in combination with a polyacrylate-based flocculant.

**Table 9.**

| | Reagent | Dosage (ppm) | Settling Rate (m/h) | Clarity (g/l) |
|---|---|---|---|---|
| 148 | Starch^{a} | 52 | cloudy | 0.20 |
| 149 | A/Starch^{a} | 8/52 | cloudy | 0.07 |
| 150 | PAA^{b} | 11 | 23.2 | 0.13 |
| 151 | A/PAA^{b} | 8/11 | 41.8 | 0.08 |

| | | | | |
|---|---|---|---|---|
| ^{a}Conventional starch flocculant ^{b}Conventional polyacrylate-based flocculant | | | | |

All numbers expressing quantities of ingredients, reaction conditions, and so forth used in the specification and claims are to be understood as being modified in all instances by the term "about." Accordingly, unless indicated to the contrary, the numerical parameters set forth in the specification and attached claims are approximations that may vary depending upon the desired properties sought to be obtained by the present invention. At the very least, and not as an attempt to limit the application of the doctrine of equivalents to the scope of the claims, each numerical parameter should be construed in light of the number of significant digits and ordinary rounding approaches.

The above description discloses several methods and materials of the present invention. This invention is susceptible to modifications in the methods and materials, as well as alterations in the fabrication methods and equipment. Such modifications will become apparent to those skilled in the art from a consideration of this disclosure or practice of the invention disclosed herein. Consequently, it is not intended that this invention be limited to the specific embodiments disclosed herein, but that it cover all modifications and alternatives coming within the scope of the invention as embodied in the attached claims.

## Claims

1. A flocculation method, comprising intermixing a silicon-containing polymer flocculant with a process stream in a process for digesting bauxite ore in an amount effective to flocculate at least a portion of solids suspended therein, wherein the suspended solids comprise at least one selected from the group consisting of calcium aluminosilicate, calcium silicate, calcium titanate and titanium dioxide, and mixtures thereof.

2. The flocculation method of Claim 1, comprising intermixing a further polymer flocculant for flocculating mud in a process for digesting bauxite ore, wherein the weight ratio of the amount of said silicon-containing polymer flocculant to the amount of said further polymeric flocculant in said flocculant composition is in the range of 100:1 to 1:10.

3. The flocculation method of Claim 1 or 2, wherein the silicon-containing polymer flocculant comprises a plurality of -Si(OR)₃ groups, wherein each R is independently selected from the group consisting of hydrogen, C₁₋₂₀ alkyl, C₂₋₂₀ alkenyl, C₂₋₂₀ alkynyl, C₆₋₁₂ aryl, C₇₋₂₀ aralkyl, a group I metal ion, a group II metal ion, and NR'₄⁺; wherein each R' is independently selected from the group consisting of hydrogen, C₁₋₂₀ alkyl, C₂₋₂₀ alkenyl, C₂₋₂₀ alkynyl, C₆₋₁₂ aryl, and C₇₋₂₀ aralkyl; and wherein R and R' are each independently unsubstituted, hydroxy-substituted, or beta hydroxy substituted.

4. The flocculation method of Claim 3, where R is selected from the group consisting of Na⁺, K⁺, and NH₄⁺.

5. The flocculation method of Claim 1, wherein the silicon-containing polymer flocculant is selected from the group consisting of a silicon-containing polyethyleneimine, a vinyl triethoxysilane copolymer, a copolymer of acrylic and/or methacrylic acid and triethoxysilylpropylacrylamide, a copolymer of acrylic and/or methacrylic acid and triethoxysilylpropylmethacrylamide, a copolymer of acrylic and/or methacrylic acid and triethoxyvinylsilane, a silicon-containing polysaccharide, a silicon-containing styrene/maleic anhydride copolymer, a silicon-containing maleic anhydride/alkyl vinyl ether copolymer, and mixtures thereof.

6. The flocculation method of Claim 1, wherein the silicon-containing polymer flocculant is hydroxamated.

7. The flocculation method of any of Claims 2 to 6, wherin the polymeric flocculant is an anionic polymeric flocculant.

8. The flocculation method of Claim 7, wherein the anionic polymeric flocculant is a hydroxamated polymer.

9. The flocculation method of Claim 8, wherein the anionic polymeric flocculant is a hydroxamated polyacrylamide.

10. The flocculation method of any of Claims 7 to 8, wherein the anionic polymeric flocculant is selected from the group consisting of a polyacrylate, a poly(acrylamide-co-acrylate), and mixtures thereof.

11. The flocculation method of any Claims 1 to 10, further comprising a component selected from the group consisting of a suspended solid product in a process for digesting bauxite ore, mud, and combinations thereof.

12. A flocculation method of any of claims 1 to 11, comprising:
intermixing a silicon-containing polymer flocculant with a process stream from a process to digest bauxite ore in an amount effective to thereby flocculate at least a portion of a the suspended solids therein; and
separating at least a portion of the flocculated suspended solids thus formed.

13. The flocculation method of any of Claims 1 to 12, wherein at least a portion of the intermixing of the silicon-containing polymer flocculant with the process stream for a process for digesting bauxite ore is conducted in at least one of a washer and a settler.

14. The flocculation method of any of Claims 1 to 13, comprising adding the silicon-containing polymer flocculant to the process stream in an amount in the range of from 0.1 part per million to 500 parts per million.

15. A floculation method, comprising intermixing a flocculant composition comprising a silicon-containing polymeric flocculant for calcium silicates, calcium aluminosilicates, calcium titanate, and/or titanium dioxide and a polymeric flocculant for a Bayer or Sinter process mud with a Bayer or Sinter process stream in an amount effective to flocculate at least a portion of solids suspended therein, wherein the suspended solids comprise at least one selected from the group consisting of calcium silicates, calcium aluminosilicates, calcium titanate, titanium dioxide, and mixtures thereof.

## Patentansprüche

1. Flockungsverfahren, umfassend Vermischen eines siliciumhaltigen polymeren Flockungsmittels mit einem Prozessstrom bei einem Prozess zum Aufschließen von Bauxiterz in einer wirksamen Menge, um mindestens einen Teil von darin suspendierten Feststoffen zu flocken, wobei die suspendierten Feststoffe mindestens einen ausgewählt aus der Gruppe bestehend aus Calciumaluminosilicat, Calciumsilicat, Calciumtitanat und Titandioxid und Mischungen davon umfassen.

2. Flockungsverfahren nach Anspruch 1, umfassend Vermischen eines weiteren polymeren Flockungsmittel zum Flocken von Schlamm in einem Prozess zum Aufschluss von Bauxiterz, wobei das Gewichtsverhältnis der Menge des siliciumhaltigen polymeren Flockungsmittels zu der Menge des weiteren polymeren Flockungsmittels in der Flockungsmittelzusammensetzung im Bereich von 100:1 bis 1:10 liegt.

3. Flockungsverfahren nach Anspruch 1 oder 2, wobei das siliciumhaltige polymere Flockungsmittel eine Vielzahl von -Si(OR)₃-Gruppen umfasst, wobei jedes R unabhängig ausgewählt ist aus der Gruppe bestehend aus Wasserstoff, C₁₋₂₀-Alkyl, C₂₋₂₀-Alkenyl, C₂₋₂₀-Alkinyl, C₆₋₁₂-Aryl, C₇₋₂₀-Aralkyl, einem Metallion der Gruppe I, einem Metallion der Gruppe II und NR'₄⁺; wobei jedes R' unabhängig ausgewählt ist aus der Gruppe bestehend aus Wasserstoff, C₁₋₂₀-Alkyl, C₂₋₂₀-Alkenyl, C₂₋₂₀-Alkinyl, C₆₋₁₂-Aryl, C₇₋₂₀-Aralkyl; und wobei R und R' jeweils unabhängig voneinander unsubstituiert, hydroxysubstituiert oder beta-hydroxysubstituiert sind.

4. Flockungsverfahren nach Anspruch 3, wobei R ausgewählt ist aus der Gruppe bestehend aus Na⁺, K⁺, und NH₄⁺.

5. Flockungsverfahren nach Anspruch 1, wobei das siliciumhaltige polymere Flockungsmittel ausgewählt ist aus der Gruppe bestehend aus einem siliciumhaltigen Polyethylenimin, einem Vinyltriethoxysilan-Copolymer, einem Copolymer aus Acryl- und/oder Methacrylsäure und Triethoxysilylpropylacrylamid, einem Copolymer aus Acryl- und/oder Methacrylsäure und Triethoxysilylpropylmethacrylamid, einem Copolymer aus Acryl- und/oder Methacrylsäure und Triethoxyvinylsilan, einem siliciumhaltigen Polysaccharid, einem siliciumhaltigen Styrol/Maleinsäureanhydrid-Copolymer, einem siliciumhaltigen Maleinsäureanhydrid/AlkylvinyletherCopolymer und Mischungen davon.

6. Flockungsverfahren nach Anspruch 1, wobei das siliciumhaltige polymere Flockungsmittel hydroxamiert ist.

7. Flockungsverfahren nach einem der Ansprüche 2 bis 6, wobei das polymere Flockungsmittel ein anionisches polymeres Flockungsmittel ist.

8. Flockungsverfahren nach Anspruch 7, wobei das anionische polymere Flockungsmittel ein hydroxamiertes Polymer ist.

9. Flockungsverfahren nach Anspruch 8, wobei das anionische polymere Flockungsmittel ein hydroxamiertes Polyacrylamid ist.

10. Flockungsverfahren nach einem der Ansprüche 7 bis 8, wobei das anionische polymere Flockungsmittel ausgewählt ist aus der Gruppe bestehend aus einem Polyacrylat, einem Poly(acrylamid-coacrylat) und Mischungen davon.

11. Flockungsverfahren nach einem der Ansprüche 1 bis 10, weiter umfassend eine Komponente ausgewählt aus der Gruppe bestehend aus einem suspendierten Festprodukt in einem Prozess zum Aufschließen von Bauxiterz, Schlamm und Kombinationen davon.

12. Flockungsverfahren nach einem der Ansprüche 1 bis 11, umfassend:
Vermischen eines siliciumhaltigen polymeren Flockungsmittels mit einem Prozessstrom von einem Prozess zum Aufschließen von Bauxiterz in einer wirksamen Menge, um dadurch mindestens einen Teil der darin suspendierten Feststoffe zu flocken; und
Abtrennen mindestens eines Teils der somit gebildeten geflockten suspendierten Feststoffe.

13. Flockungsverfahren nach einem der Ansprüche 1 bis 12, wobei mindestens ein Teil des Vermischens des siliciumhaltigen polymeren Flockungsmittels mit dem Prozessstrom für einen Prozess zum Aufschließen von Bauxiterz in mindestens einem Waschtank und einem Sedimentiertank durchgeführt wird.

14. Flockungsverfahren nach einem der Ansprüche 1 bis 13, umfassend Zugeben des siliciumhaltigen Polymerflockungsmittels zu dem Prozessstrom in einer Menge im Bereich von 0,1 Teilen pro Million bis zu 500 Teilen pro Million.

15. Flockungsverfahren, umfassend Vermischen einer Flockungsmittelzusammensetzung, die ein siliciumhaltiges polymeres Flockungsmittel für Calciumsilicate, Calciumalumosilicate, Calciumtitanat und/oder Titandioxid und ein polymeres Flockungsmittel für einen Bayer- oder Sinterprozessschlamm umfasst, mit einem Bayer- oder Sinterprozessstrom in einer wirksamen Menge, um mindestens einen Teil der darin suspendierten Feststoffe zu flocken, wobei die suspendierten Feststoffe mindestens einen ausgewählt aus der Gruppe bestehend aus Calciumsilicaten, Calciumaluminosilicaten, Calciumtitanat, Titandioxid und Mischungen davon umfassen.

## Revendications

1. Procédé de floculation, comprenant le mélange d'un floculant polymère contenant du silicium avec un flux de procédé d'un procédé de digestion de minerai de bauxite dans une quantité efficace pour floculer au moins une partie des solides en suspension dans ledit flux, dans lequel les solides en suspension comprennent au moins un solide choisi dans le groupe constitué par l'aluminosilicate de calcium, le silicate de calcium, le titanate de calcium, le dioxyde de titane et leurs mélanges.

2. Procédé de floculation selon la revendication 1, comprenant le mélange d'un floculant polymère supplémentaire pour floculer la boue d'un procédé de digestion de minerai de bauxite, dans lequel le rapport en poids de la quantité dudit floculant polymère contenant du silicium à la quantité dudit floculant polymère supplémentaire dans ladite composition de floculants est dans la plage de 100:1 à 1:10.

3. Procédé de floculation selon la revendication 1 ou 2, dans lequel le floculant polymère contenant du silicium comprend une pluralité de groupes -Si(OR)₃, chaque R étant choisi de manière indépendante dans le groupe constitué par un hydrogène, un alkyle en C₁-C₂₀, un alcényle en C₂-C₂₀, un alcynyle en C₂C₂₀, un aryle en C₆-C₁₂, un aralkyle en C₇-C₂₀, un ion d'un métal du groupe I, un ion d'un métal du groupe II, et NR'₄⁺; dans lequel chaque R' est choisi de manière indépendante dans le groupe constitué par un hydrogène, un alkyle en C₁C₂₀, un alcényle en C₂-C₂₀, un alcynyle en C₂-C₂₀, un aryle en C₆-C₁₂ et un aralkyle en C₇-C₂₀ ; et dans lequel R et R' sont chacun, de manière indépendante, non substitué, substitué par un groupe hydroxy, ou substitué par un groupe béta hydroxy.

4. Procédé de floculation selon la revendication 3, dans lequel R est choisi dans le groupe constitué par Na⁺, K⁺ et NH₄⁺.

5. Procédé de floculation selon la revendication 1, dans lequel le floculant polymère contenant du silicium est choisi dans le groupe constitué par une polyéthylèneimine contenant du silicium, un copolymère de triéthoxysilane de vinyle, un copolymère d'acide acrylique et/ou méthacrylique et de triéthoxysilylpropylacrylamide, un copolymère d'acide acrylique et/ou méthacrylique et de triéthoxysilylpropylméthacrylamide, un copolymère d'acide acrylique et/ou méthacrylique et de triéthoxyvinylsilane, un polysaccharide contenant du silicium, un copolymère styrène/anhydride maléique contenant du silicium, un copolymère anhydride maléique/éther alkylvinylique contenant du silicium, et leurs mélanges.

6. Procédé de floculation selon la revendication 1, dans lequel le floculant polymère contenant du silicium possède une fonction hydroxamate.

7. Procédé de floculation selon l'une quelconque des revendications 2 à 6, dans lequel le floculant polymère est un floculant polymère anionique.

8. Procédé de floculation selon la revendication 7, dans lequel le floculant polymère anionique est un polymère à fonction hydroxamate.

9. Procédé de floculation selon la revendication 8, dans lequel le floculant polymère anionique est un polyacrylamide à fonction hydroxamate.

10. Procédé de floculation selon l'une quelconque des revendications 7 à 8, dans lequel le floculant polymère anionique est choisi dans le groupe constitué par un polyacrylate, un poly(co-acrylate d'acrylamide), et leurs mélanges.

11. Procédé de floculation selon l'une quelconque des revendications 1 à 10, comprenant en outre un composant choisi dans le groupe constitué par un produit solide en suspension dans un procédé de digestion de minerai de bauxite, une boue, et leurs mélanges.

12. Procédé de floculation selon l'une quelconque des revendications 1 à 11, comprenant :
le mélange d'un floculant polymère contenant du silicium avec un flux de procédé issu d'un procédé de digestion de minerai de bauxite dans une quantité efficace pour floculer ainsi au moins une partie des solides en suspension dans ledit flux ; et
la séparation d'au moins une partie des solides en suspension floculés ainsi formés.

13. Procédé de floculation selon l'une quelconque des revendications 1 à 12, dans lequel au moins une partie du mélange du floculant polymère contenant du silicium avec le flux de procédé d'un procédé de digestion de minerai de bauxite se déroule au moins soit dans un laveur, soit dans un décanteur.

14. Procédé de floculation selon l'une quelconque des revendications 1 à 13, comprenant l'adjonction du floculant polymère contenant du silicium au flux de procédé dans une quantité allant de 0,1 partie par million à 500 parties par million.

15. Procédé de floculation, comprenant le mélange d'une composition de floculants comprenant un floculant polymère contenant du silicium pour les silicates de calcium, les aluminosilicates de calcium, le titanate de calcium et/ou le dioxyde de titane, et un floculant polymère pour une boue de procédé Bayer ou de procédé de frittage avec un flux de procédé Bayer ou de procédé de frittage dans une quantité efficace pour floculer au moins une partie des solides en suspension dans ledit flux, dans lequel les solides en suspension comprennent au moins un élément choisi dans le groupe constitué par les silicates de calcium, les aluminosilicates de calcium, le titanate de calcium, le dioxyde de titane et leurs mélanges.
